# EUROPEAN PATENT SPECIFICATION

(11) **EP 3 560 211 B1**
(45) Date of publication and mention of the grant of the patent: **20.03.2024**
(21) Application number: 17829274.4
(22) Date of filing: 27.12.2017
(51) Int. Cl.: H04N 21/61, H04N 21/436, H04N 21/4363, H04N 21/414, H04N 21/482, H04N 21/222

(54) **SYSTEM FOR THE TRANSMISSION OF DATA FOR VIDEO AND/OR AUDIO IN A DEFINED AREA**
SYSTEM ZUR ÜBERTRAGUNG VON DATEN FÜR VIDEO UND/ODER AUDIO IN EINEM DEFINIERTEN BEREICH
SYSTÈME DE TRANSMISSION DE DONNÉES POUR VIDÉO ET/OU AUDIO DANS UNE ZONE DÉFINIE

(30) Priority: 23.12.2016 GB 201622090; 16.05.2017 GB 201707838
(43) Date of publication of application: 30.10.2019
(73) Proprietor: Global Invacom Ltd., Stevenage, Hertfordshire SG1 2UG (GB)
(72) Inventor: FISHER, Steven, Newmarket, Ontario L3Y 7X2 (CA); STAFFORD, Gary, Stevenage Hertfordshire SG1 2UG (GB)
(74) Representative: Wood, Graham
(86) International application number: PCT/GB2017/053895
(87) International publication number: WO 2018/115909

(56) References cited:
- WO-A1-2016/132109
- WO-A2-03/096669
- US-A1- 2001 043 575
- US-A1- 2004 244 058
- US-A1- 2013 104 169
- US-A1- 2016 192 013

## Description

The invention to which this application relates is a system which allows the communication of data relating, typically, although not necessarily exclusively, to television or radio programmes and allows the communication of said data from one or more sources to one or more further locations. In one embodiment, the system also allows the operation of the source from said one or more further locations by allowing the two way transmission of data.

In the provision of broadcast data to a premises, the user typically has the option of paying a subscription for, or buying, a receiving apparatus, typically referred to as a set top box or broadcast data receiver which acts as a source at the physical location of the apparatus for radio and television channels and/or other services via a display screen and/or speakers of the device to which the same is connected, or provided integrally with. This form of apparatus is well known and allows for the processing and/or storage of data and allows the generation of a television or radio channel selected by the user from a range of available television or radio channels which can be generated.

While this form of system operates in a desired manner for data which is broadcast via satellite, cable and/or terrestrial broadcast systems, and provides the radio and television channels in the premises in the room at the location at which the source is located, problems can arise in public access areas where there may be a demand for a range of user devices to be provided with video and/or audio data and for the video and/or audio data to be provided to the respective devices so as to allow the different user devices to selectively display the same or different video and/or audio to the respective device users.

In the distribution of data to allow the generation of video and /or audio therefrom, effectively to a plurality of relatively dense, high user receiver locations, such as in public areas e.g cafes, public transport terminus and the like, the use of on demand or "player" services is common such as the BBC i-player service. This allows users to request a particular program from a list of available, typically historical, programs and the data for the selected programme is transmitted to the user's device at the location via a broadband internet connection to that location and the device is used to generate the video and audio for the selected programme upon receipt of the appropriate data from the broadband internet service.

When the data is to be provided live, the data for the user selected programme is selected from the data which is being broadcast at that time at the receiver location for the programmes which are scheduled to be shown at that time, and the selected programme can be viewed. Alternatively, if the user selects to use one of the on-demand services, such as the i-player or Netflix services, the user can select to view a programme from a catalogue of current or previously available, programmes. The use of the broadband network internet service such as via a fixed cable or wireless telephone network allows the data to be provided to a small number of devices but when the demand from the number of devices becomes greater, such as in a café or other public area such as a transport hub, it is found that the broadband network used to deliver the data cannot cope with the demand and the service fails to all of the users or, at least, is adversely affected. Thus, the relatively large amounts of data which are required to be simultaneously transmitted via the broadband network to the receiving location in order to allow the selected programme to be generated puts considerable strain on the broadband network and the capacity of the same to provide data to one receiver device location or a number of receiver devices locations.

A further problem is the capability of the wireless distribution system at the location at which the devices are in use, such as, for example, the wireless system which is used at a café and which can be accessed by members of the public when in the café. Frequendy, the wireless system is not capable of being able to distribute the data which is required to be sent to each of the devices in order for that device to be able to provide the selected programme to the user via their respective device.

This therefore means that at present there are two distinct bottlenecks to the provision of the required service to device users, the first potential bottleneck being the broadband provision of the data to the premises and the second potential bottleneck being the wireless distribution of the data at the location at which the devices are to be used. This means that the successful provision of the data for the whole programme for the users may not be achieved due to problems with the broadband connection during the transmission of the data, the transmission of the data may be slow due to the capacity problems and/or the provision of other services via the broadband connection can be compromised; all of which can lead to frustration for the user and system problems to the internet broadband provider.

US2001043575 discloses a system for transmitting data using a server local to the area at which the service is provided and WO2016132109 discloses a two-way satellite system.

An aim of the present invention is therefore to provide a system which allows the delivery of data for multiple live broadcast TV & Radio channels to a relatively large number of mobile client devices in high density public spaces while simultaneously providing general internet access. A further aim is to allow both of these services to be provided in a manner which prevents the demand for one of the services, such as the internet access, from becoming too great at the location at which the mobile devices are used.

In a first aspect of the invention there is provided a system for the transmission of data to a plurality of user devices from one or more sources, said user devices located within an area defined by the range of wireless transmission apparatus so as_to receive data transmitted wirelessly within said defined area and processing the same in order to allow video and/or audio to be generated on the user device, said user device including means to allow user interaction via the device in order to select, from a service of a group of available programmes or programme channels, a programme to be viewed and/or listened to via the respective user device, and the said group of available programmes or channels is selected with reference to predefined criteria by a server which receives data from the one or more sources and said server is located at a satellite uplink facility remote from the said area to transmit the data via satellite IP to the wireless transmission apparatus so as to transmit data wirelessly within the defined area, the data for the programmes in the said group of programmes or channels is multicast wirelessly from the wireless transmission apparatus within the said defined area so that the data for all of the group of programmes or channels is available to be selected and received by all of the user devices located within the defined area characterised in that the same data as that required for the said group of programmes which is wirelessly provided to the defined wireless range area is blocked from being transmitted via a broadband internet connection to the said area so as to prevent duplication of data being provided to the area and reduce the amount of data being carried by the said broadband internet connection.

In one embodiment there are provided a plurality of receiving locations.

Typically the said receiving locations are geographically spaced but receive data via the satellite transmission system from a common transmitting head end.

In one embodiment the Wireless data transmission apparatus acts as a Wireless data Hotspot Access Point.

In one embodiment the wireless data apparatus is adapted to assist with remote feedback of status and control of the apparatus and/or devices from the head end apparatus and/or other remote control apparatus.

In one embodiment feedback obtained from the user devices is to allow performance metrics and statistics to be provided with the retrieved information used to make the system self-configuring/optimising. As there are quite a few system parameters which are interlinked, and as every system installation environment will be different and time varying, the challenge of setup/configuration can be eased by the use of user device feedback so as to allow changing conditions to be taken into account.

In one embodiment there is provided a plurality of Wireless data Transmission apparatus at the receiving location.

In one embodiment the said group of Wireless data Transmission apparatus are controlled by common control software and/or processing means.

Typically an IP enabled Satellite Link is used to provide the Network IP connection between the Wireless data apparatus at the receiving location and the server and processing means at the head end.

In one embodiment at the head end server and processing means there is provided an input which allows DVB inputs for the satellite service to be input and processed and then transmitted to the Wireless data transmission apparatus at the one or more receiving locations. Instead of, but most commonly in addition, other sources can be provided as well as, or in place of, the DVB satellite input and these said sources could be, for example, Cable or Terrestrial TV and/or other IP video and/or audio data streams which bypass the DVB transmission tuners.

In one embodiment a group of available programmes or channels is selected with reference to predefined criteria by a server which receives data from the one or more sources and then transmits the data for the said programmes or channels to the remote location for onward transmission at the receiving location via the Wi-Fi apparatus and thereby make the same available to the said user devices when located in the said defined area.

Typically the system in accordance with the invention is scalable and preferably can be used by any number of users to access content and/or can be usable in most if not all geographical locations.

In one embodiment the said group of available programmes or channels is a subset of the programmes for which data is broadcast to the server from one or more said sources in the form of any or any combination of satellite, cable, DAB, DVBT transmission sources.

In one embodiment the said predefined criteria are determined by a service provider for the defined area and/or the owner or operator of a premises within which the defined area is located.

In one embodiment the system includes the use of multicast transmission in order to make as large numbers of users possible and minimises wireless bandwidth usage so that more reliable wireless delivery is possible. This also allows wireless bandwidth to be available for the general internet access. Forward Error Correction (FEC) is also preferably used to ruggedise the stream for wireless transmission and transcoding can be used to ensure that the programmes occupy a known wireless bandwidth. In one embodiment the FEC system is based on Raptor codes In addition or alternatively other data adaptation methods can be used, such as Random Linear Network Coding (RLNC)

In one embodiment the data for the said group of programmes or channels is adapted following receipt by the server and prior to transmission to the remote location in order to render the data in a preferred format for wireless transmission.

In one embodiment the data received at the server at the head end is adapted into an Internet Protocol (IP) format by the server and the selection is made of the data for the said group of programmes or channels.

In one embodiment the adaptation includes a reduction of the bit rate at which the data is to be transmitted to the remote location and then wirelessly transmitted so that the same is sufficiently low so as to ensure reliable transmission of the data to the user devices within the said wireless range.

In one embodiment the selectable programmes may be provided as a group of programmes selected from a range of different channels which changes over time so that the selection of the group is made with respect to specific programmes or alternatively specific channels are selected so that while the programmes will change over time they are provided in the same order and on selected channels as they would be provided when streamed as part of a conventional channel service. In one embodiment the group of programmes therefore appears to the user at the user interface as a group of identified channels such as for example, programmes provided on BBC1, Sky News or the like and, most typically, the channels are selected from those channels which are regarded as free to air channels in order to enable the content to be available without the need for provision of a smartcard. However it is possible that the system will include some form of Digital Rights Management (DRM) as an option.

In one embodiment, upon a user selection of a programme, the user's device identifies the relevant portion of data from the received multicast data, and uses the identified portion of data to generate the selected programme or channel on that device.

Typically the user interface is generated on the screen of the users device and will identify the group of programmes or channels available from the service at that time, and the user can then select to view and/or listen to one of the programmes at that time.

In one embodiment the user interface is provided as an "app" or application which can be downloaded to the user's device and thereafter used to make the programme selection. In one embodiment the app includes further user selection options including any or any combination of; selecting to receive other programmes or service via a broadband connection and/or advertising for the service provider.

In one embodiment the system includes a router for use in communication with the server to assist in configuring the data which is to be wirelessly provided at the defined area. The provision of a router which is in association with the system also helps to ensure that the router apparatus which is used is particularly suited and formatted to most efficiently transmit the data wirelessly within the defined area.

In one embodiment the operator or controller of the system is provided with means to block the same data as that required for the said group of programmes from being provided to the defined area via a broadband internet connection. This therefore means that the operator can take steps to prevent duplication of data being provided to the defined area and thereby reduce the amount of data being carried by the broadband internet connection and therefore improve that service.

In one embodiment there is transmission of data from the user's device to the server when the user's device is in the defined area so as to register the device at the server.

Typically therefore the group of programmes or channels is made available to user's devices within the defined area whilst ensuring that the content of the programmes is made available in a secure manner.

Typically the data provided for the group of programmes is for standard definition versions of the programmes to minimise the bandwidth required to wirelessly transmit the programme data.

Typically the wireless transmission of the said data to the user devices within the defined area is via a distribution system which is local to that area such as a Local Area Network (LAN).

Most typically the said defined area is a high density populated environment such as a cafe, public transport terminus or any public building.

The purpose of the adaptation which is performed at the head end by the server and processing means is to provide a more "rugged" data stream which can be more successfully wirelessly transmitted at the receiving location and thereby provide a more effective continuous service of the said group of programmes to user devices is heavily populated with user devices.

Typically the said service is a multicast service.

In one embodiment the wireless transmission apparatus includes an antenna, LNB and a Satellite IP Modem and Router so as to create the wireless service within the defined area.

Typically the wireless transmission apparatus includes the facility to provide a broadband internet service to the user devices within the defined area.

In one embodiment the said group of available programmes or channels is a subset of the programmes for which data is broadcast to the server from one or more said sources in the form of any or any combination of satellite, cable, DAB, DVBT transmission sources.

In one embodiment the data content can be directed into the server from any other source of video and/or audio such as any, or any combination of live IP streams, remote files accessed over IP networks to files stored on a hard disk connected to the server.

In one embodiment the said predefined criteria are determined by a service provider for the defined area and/or the owner or operator of a premises within which the defined area is located and/or a sponsor/provider of a particular service.

In one embodiment the multicast is provided from the satellite uplink location to apparatus at a number of defined wireless distribution areas.

Typically the data for the selected service from the satellite uplink is provided as a plurality of data streams over the IP satellite link using multicast IP. In one embodiment, in addition, the additional multicast transmission of forward error correction data is provide from the uplink to the designated areas modems via the satellite IP transmission for each data stream so as to enable IP based user devices, which are primarily connected wirelessly at the designated areas, to recover any video & audio data that may have been lost during the transmission of the data over the satellite and subsequently via any wired but most typically wireless local area networks at the designated areas.

In one embodiment the data for the said group of programmes or channels is adapted following receipt by the server and prior to wireless transmission in order to render the data in a preferred IP format for wireless transmission and the selection is made of the data for the said group of programmes or channels.

Typically the adaptation includes a reduction of the bit rate at which the data is to be wirelessly transmitted so that the same is sufficiently low so as to ensure reliable transmission of the data to the user devices within the said defined area.

In one embodiment the data for the programmes in the said group of programmes or channels is multicast wirelessly from the server and wireless transmission apparatus within the said defined area so that the data for all of the group of programmes or channels is available to be selected and received by all of the user devices located within the defined area.

In one embodiment the selectable programmes may be provided as a group of programmes selected from a range of different channels which changes over time so that the selection of the group is made with respect to specific programmes or alternatively specific channels are selected so that while the programmes will change over time they are provided in the same order and on selected channels as they would be provided when streamed as part of a conventional channel service. In one embodiment the group of programmes therefore appears to the user at the user interface as a group of identified channels such as for example, programmes provided on BBC1, Sky News or the like and, most typically, the channels are selected from those channels which are regarded as free to air channels in order to enable the content to be available without the need for provision of a smartcard. However it is possible that the system will include some form of Digital Rights Management (DRM) as an option.

In one embodiment, upon a user selection of a programme, the user's device identifies the relevant portion of data from the received multicast data, and uses the identified portion of data to generate the selected programme or channel on that device.

The apparatus and system in accordance with the current invention allows a multicast data system to be provided in areas where other services may not be possible due to lack of infrastructure and/or capacity and/or said defined area is a relatively high density populated environment such as a cafe, public transport terminus or any public building.

In one embodiment there is transmission of data from the user's device to the server when the user's device is in the defined area so as to register the device at the server.

Typically the wireless transmission of the said data to the user devices within the defined area is via a distribution system which is local to that area such as a Local Area Network (LAN).

In one embodiment the server generates a menu of the group of programmes which are available to be selected and this is made available at the user devices within the defined area.

Specific embodiments of the invention are now described with reference to the following Figures; wherein
Figure 1 illustrates schematically a data transmission system in accordance with one embodiment of the invention; and
Figure 2 illustrates a system in accordance with one embodiment of the invention illustrating the components utilised in the system and the respective location of the same,
Figure 3 illustrates schematically a distribution system in accordance with the invention.
Figure 4 graphically illustrates the manner in which the system performance can be optimised with respect to the parameters of video bit rate, tolerance to loss and latency.
Figure 5 illustrates a user device display showing two embodiments of user interfaces;
Figure 6 illustrates an embodiment of the software levels utilised to control the operation of the system; and
Figures 7 and 8 illustrate graphically results from two trials of use of embodiments of the system

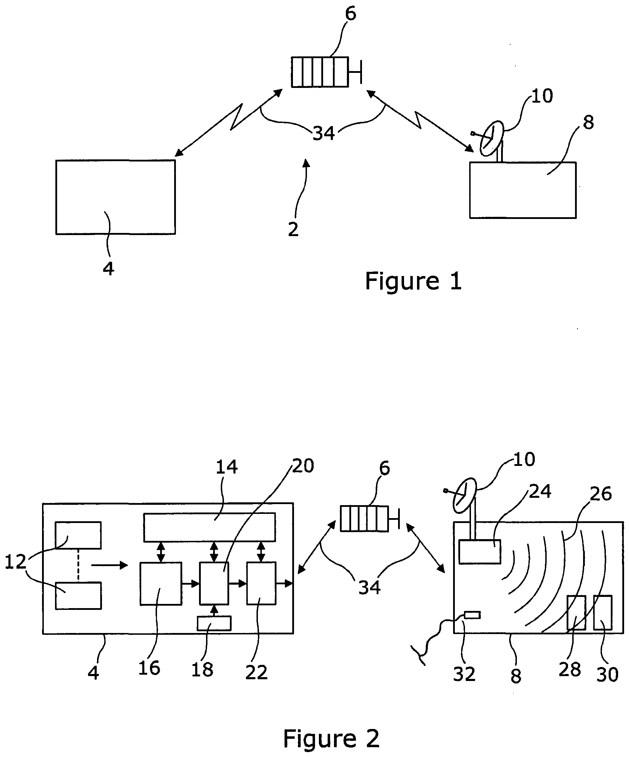

Referring first to Figure 1, there is illustrated a satellite data transmission system of the toe which can be utilised to perform the current invention. There is provided a head end transmission station 4 at a first geographical location which is provided to allow the transmission, and receipt of data. The data which is transmitted is typically representative of a number of television and radio channels and is transmitted via satellite 6 to a plurality of locations 8 which are remote from the head end and one such receiving location is indicated but it should be appreciated that the format of each receiving location will typically be the same with each location 8 provided with a suitably directed antenna to receive the data from the satellite 6. It will typically also be possible for control and other data to be transmitted from the receiving location 8 to the head end 4.

The system in accordance with the invention is shown in more detail in Figure 2 at which there is again shown the head end 4, satellite 6 and a receiving location which in this case is in the form of a public building such as a rail or bus terminus, but could equally be a café, restaurant or other relatively high density location or indeed any location at which the system as herein described would be of advantage. In accordance with the invention, at the head end 4 there are provided one, but typically a number of data sources such as DVB tuners 12 which feed data for the said television and radio channels onwards to processing apparatus and a server in accordance with the invention. Other sources can be used such as by using other tuner types or by direct IP connection.

In this embodiment the processing means include a system and network processor 14 which communicates with video processing apparatus 16 to allow adaptation of the video data prior to onward transmission to a Sat IP server 20 which is also in communication with a DRM processing means 18. The data is then passed to an FEC encoder 22 and all this is provided and the processing performed at the head end 4.

After this, the adapted data is then transmitted in a Sat IP format to be received by the one or more receiving locations 8 and typically a two way IP Satellite link is used.

At the receiving location 8 there is provided Wireless data transmitting apparatus s 24 which transmits the received data within a wireless range 26. The apparatus 24 may comprise a number of Wireless data transmitting units, perhaps provided at different parts of the receiving location 8 so as to maximise the wireless range. Each of the units will typically link to an overall controller 24 communicating back to the headend 4.

The wirelessly transmitted data represents the television and radio service which is generated from the head end and which is then made available to the users within the range 26 via their devices such as mobile phone 28 or tablet device 30.

A standard internet connection 32 is also typically provided at the remote location but this could, in addition, or alternatively, be delivered over the same IP Satellite Link 34 link as the television and/or radio data from the head end and/or by other means.

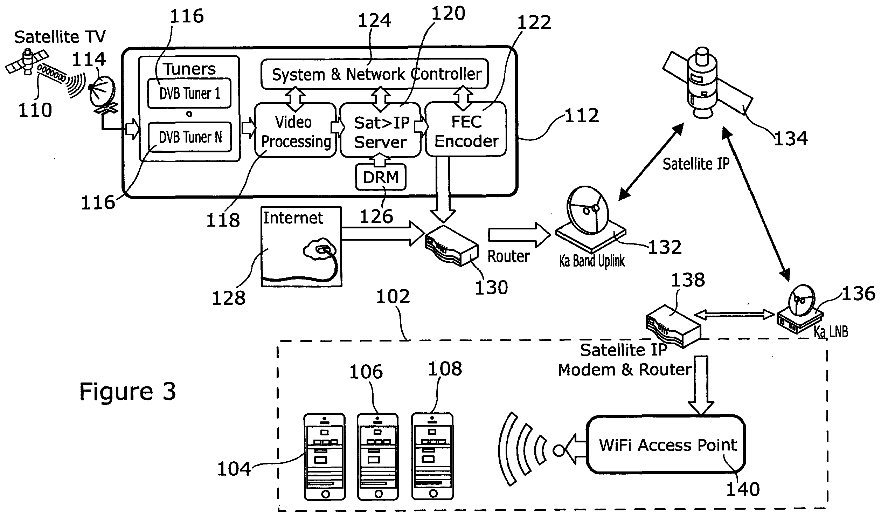

Referring now to Figure 3 there is illustrated in broken lines an area 102, in which there is provided a wireless transmission system to provide a wireless data transmission range in which user devices 104,106,108 can be selectively used. A considerable number of the devices 104,106, 108 can be used at the same time and each of which can potentially be used by the user of the device to request a programme that is to be viewed. The programme may be selected by the user from a range of programmes or the programme may be to view a specific live event, such as a sports event. Due to the relatively large amount of data which is required to be transmitted via the broadband service to meet each user request, so it will be appreciated that there is a significant capacity requirement.

In order to meet the demand then, in accordance with the system as illustrated in Figure 3 there is provided a satellite broadcast source 110 which transmits data in a conventional format to be received at an uplink location 112 which receives the data via antenna 114. The said data, which is typically a subset of the received data, such as for one programme or a subset of channels, is then selected via one or more tuners 116 to allow the required data for the service which is to be provided to the user devices to be generated.

The selected data then passes through video processing 118, Sat IP server 120 and FEC encoder 122 located at the uplink location 112. These allow the generation of data streams for onward transmission via the satellite IP uplink of multiple, typically live/real time, video & audio streams (TV channels) over an IP satellite link using multicast IP and the additional multicast transmission of forward error correction data for each stream so as to enable the IP based user devices, which are primarily connected wirelessly, to recover any video & audio data that may have been lost during the transmission of the data over the satellite and subsequent wired and /or wireless local networks.

A system and network controller 124 and Digital Rights Management controller 126 are also provided.

The selected and processed data is then passed, in conjunction with broadband internet service data 128, to a router/server 130 in a satellite IP format to an uplink transmitter 132 to a satellite IP transmitter 34. The selected and processed data is then received at one, but typically a number of different locations, via antenna and LNB 136 provided at each of the areas 102. At each of the areas the received data is passed to a satellite IP modem and router 138 and made available via the WiFi Access point 140 to the defined area 102.

Each of the user devices 104,106,108 can then be independently controlled to allow the user to access programme data which is available from the range which is transmitted wirelessly within the defined area 102. By providing the router/server at the satellite uplink location so the same service can be made available to a number of destinations simultaneously and at each of said destinations the same service can be received and made available for use by user devices.

In one embodiment the multicasting of data can be achieved by a set of software applications running on a Linux based PC platform which allows customization of the system for each specific use case and installation. The use of DVB-S/S2/T/T2/C tuner demodulators allow reception of broadcast TV and an IP input allows content to be taken in from IP sources whilst file inputs allow preloaded content to be played out. Transcoding of the multiple data streams can be performed if required.

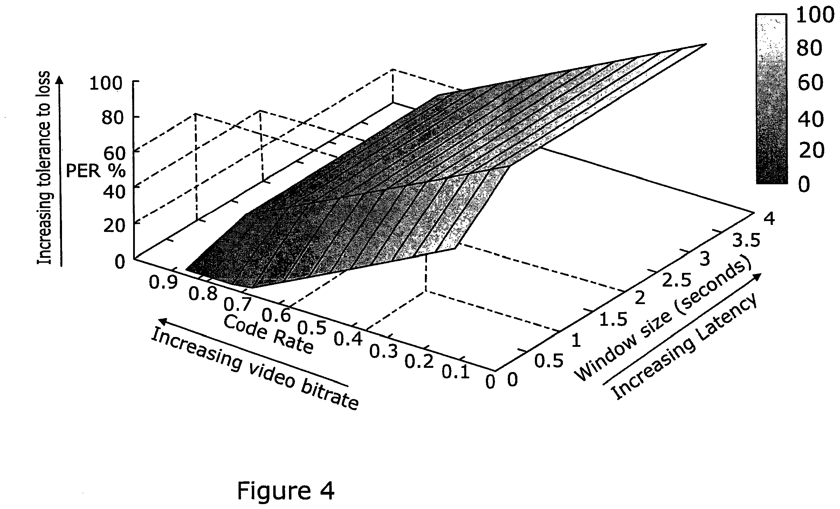

As shown with reference to Figure 4, the system is configurable to ensure optimal performance for each installation by configuring: the ratio of multicast TV/Radio streams to available Internet bandwidth, configuring the data stream quality, resolution & bitrate, configuring the Modulation Coding Scheme (MCS) the FEC code rate and /or Latency in the system.

The provision of the Server allows the ingestion of content from any of the types of input and allows the processing of video and audio to change any or any combination of Video and audio codec, Video and audio quality / bitrate, Video and audio container format, Generate Forward error correction, Buffer video and audio data, Pass block of data to FEC encoder, generate stream identification signalling, advertise the stream availability, sending data out over the network, packetizing and formatting data, transmission over an IP network of any size or configuration and any underlying physical transmission medium, The client user device can each then discover and select one or more available datastreams, buffer received video, audio and FEC data, decode FEC and using received data recover any lost packets. The device can then process the received video and audio and display the video and audio vi a display screen and speakers respectively.

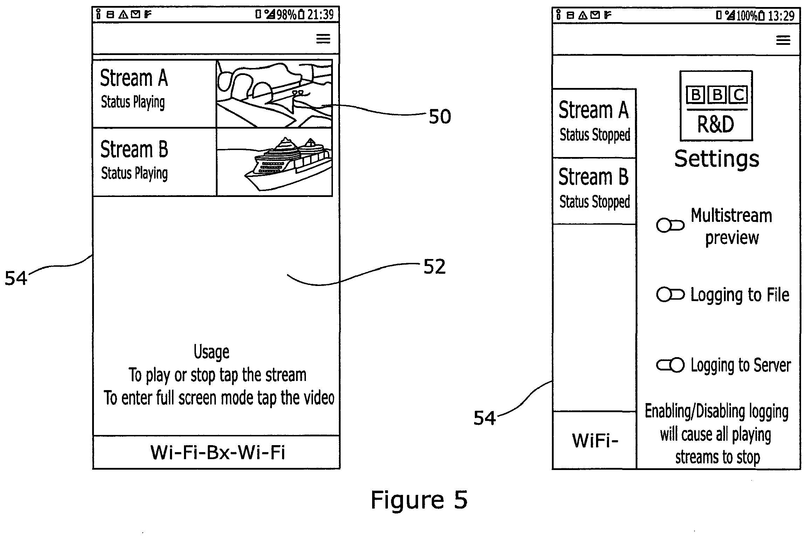

The user device can be used for video streaming in a suitable format such as full screen or thumbnail views as illustrated in Figure 5 in which multi-data stream preview displays 50, 52 are generated on the screen 54 in order to allow the user to preview multiple live streams simultaneously. The system also allows the screen 54 to display a user interface display 56 which allows the generation of information to the user such as information relating to the WiFi network indication to inform user to connect to the appropriate WiFi network, and it is possible to gain feedback in the form of performance statistics and device information which can be logged to the server or to a file on the device.

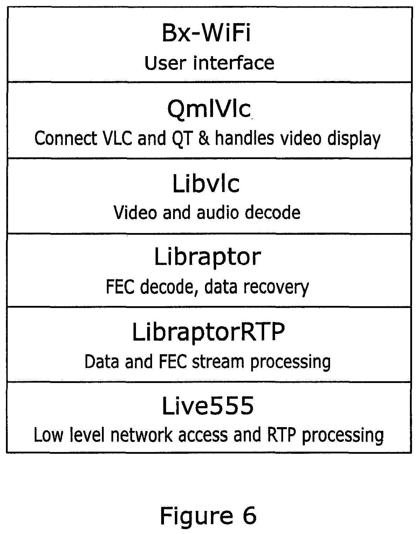

The system control can be achieved using a combination of software tools and one such "stack" of software is illustrated in Figure 6 where there is provided several distinct layers formed from a combination of third party and in-house developed libraries with the third party layers including Libvlc, Live555 and in house developed layers including-Bx-WiFi, QmlVlc, Libraptor and LibraptorRTP. The use of multiple software control layers allows sub system development and testing to be performed without affecting the operation of the remaining control system and provides flexibility for future development changes.

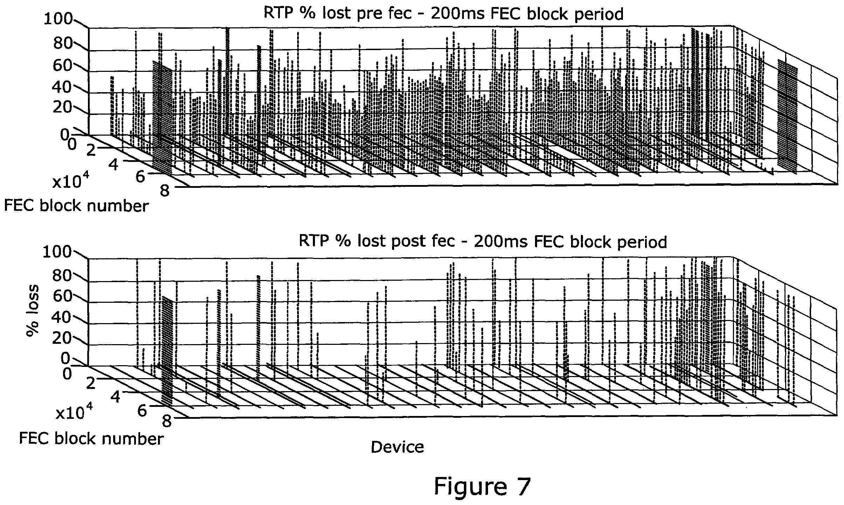

Trials of the system in accordance with one embodiment of the invention have been performed in partnership with the BBC in a wireless data are in the form of a large tent and over a three day period during the Edinburgh Festival and members of the public were invited to download the application onto their device. In the trial a SAT>IP WiFi hotspot was created using four WiFi access points positioned at the site and the SAT-IP server generated 2 datastreams. The results identified that 62 unique user devices had been used and 47 of those were used simultaneously with 34 unique device types being used. The trial provided evidence that the system can be used with many different devices and that the use of FEC significantly improves the data stream reliability in a real word environment and Figure 7 illustrates graphically the trial results.

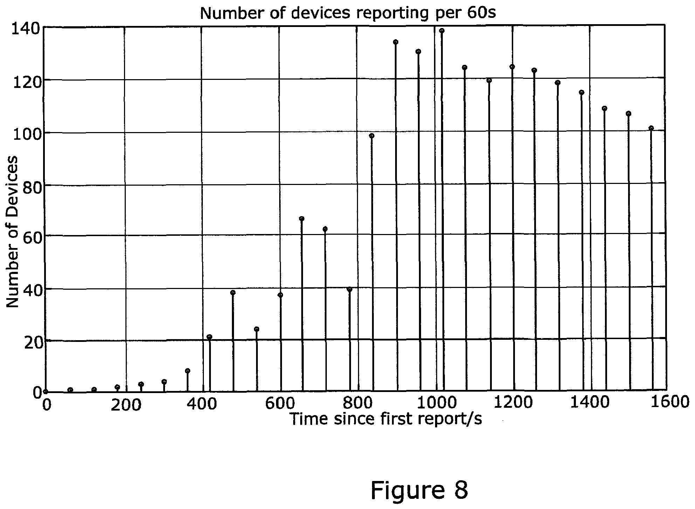

A second trial was performed in a lecture hall at the University of Hertfordshire and students in the hall at that time used an embodiment of the system of the invention in order to watch a video stream as part of the lecture. Three WiFi access points were positioned at the Hall and again 2 data streams were generated. The results of the successful trial are indicated in Figure 8 and in this trial 138 devices were connected and used by their users to select and view one of the data streams simultaneously.

The present invention therefore provides for the transmission of multiple live/real time video & audio streams (TV channels) over an IP satellite link using multicast IP. Typically there is the additional multicast transmission of forward error correction data for each stream so as to enable IP based user devices, which are primarily connected wirelessly, to recover any video & audio data that may have been lost during the transmission of the data over the satellite and subsequent wired and wireless local networks. This therefore allows a robust multicast system to be provided to user devices in a plurality of designated areas or locations, thereby allowing live events and/or programmes on one or more selected channels to be available for the user to select to view independently of any internet connection which may or may not be provided to that area or location and thereby avoid the problems of bottlenecks and/or lack of availability.

The invention therefore allows the delivery of multiple live broadcast TV & Radio channels to many mobile clients in high density public spaces while simultaneously providing general internet access. Any number of users can access the content and the system is usable in any geographical location. The use of SAT>IP allows the passing through of any data received off-air unchanged whilst the possibility that the bit rate of streams > bandwidth of the wireless IP network is avoided by using transcoding at the SAT>IP Wireless data transmission apparatus to adjust the data stream bit rate if required.

## Claims

1. A system for the transmission of data to a plurality of user devices (104,106,108) from one or more sources, said user devices located within an area defined by the range of wireless transmission apparatus (140) so as to receive data transmitted wirelessly within said defined area (102) and processing the same in order to allow video and/or audio to be generated on the user device (104,106,108), said user device including means to allow user interaction via the device in order to select, from a service of a group of available programmes or programme channels, a programme to be viewed and/or listened to via the respective user device, and the said group of available programmes or channels is selected with reference to predefined criteria by a server (20,120) which receives data from the one or more sources and said server is located at a satellite uplink facility (112) remote from the said area (102) to transmit the data via satellite IP to the wireless transmission apparatus (140) so as to transmit data wirelessly within the defined area (102), the data for the programmes in the said group of programmes or channels is multicast wirelessly from the wireless transmission apparatus (140) within the said defined area (102) so that the data for all of the group of programmes or channels is available to be selected and received by all of the user devices (104,106,108) located within the defined area (102) **characterised in that** the same data as that required for the said group of programmes which is wirelessly provided to the defined wireless range area (102) is blocked from being transmitted via a broadband internet connection to the said area (102) so as to prevent duplication of data being provided to the area (102) and reduce the amount of data being carried by the said broadband internet connection.

2. A system according to claim 1 **characterised in that** the wireless data transmission (140) apparatus acts as a Hotspot Access Point.

3. A system according to claim 1 **characterised in that** the wireless data transmission apparatus (140) is adapted to assist with remote feedback of status and control of the apparatus (4) and/or devices from the head end apparatus and/or other remote control apparatus.

4. A system according to any of claim 1-3 **characterised in that** there is provided a plurality of wireless data transmission apparatus (140) at the receiving location (8) which are controlled by common control software and/or processing means.

5. A system according to claim 1 **characterised in that** an IP enabled Satellite Link is used to provide a Network IP connection between the wireless data transmission apparatus (140) at the receiving location (8) and the server (20,120) and processing means at the head end (4).

6. A system according to claim 1 **characterised in that** at a head end server and processing means there is provided one or more inputs which allows any or any combination of DVB inputs for the satellite service; Cable or Terrestrial TV and/or other IP video and/or audio data streams such as any, or any combination of, remote files accessed over IP networks, files stored on a hard disk connected to the server, to be input and processed and transmitted to the Wireless transmission apparatus (140) at the one or more receiving locations (8).

7. A system according to any of the preceding claims **characterised in that** a group of available programmes or channels is selected with reference to predefined criteria by the server (20,120) which receives data from one or more sources and transmits the data for the said programmes or channels to the remote location for onward transmission at the receiving location (8) via the Wi-Fi transmission apparatus (140) to thereby make the said group to be available to the said user devices (104,106,108) when located in the said defined area (102) and the said predefined criteria are determined by a service provider for the defined area and/or the owner or operator of a premises within which the defined area is located.

8. A system according to any of the preceding claims **characterised in that** the system is scalable with reference to the number of user devices (104,106,108) which can access content and/or a number of different geographically spaced receiving locations (8) which receive data via the satellite transmission system from a common transmitting head end (4).

9. A system according to claim 7 **characterised in that** the said group of available programmes or channels is a subset of the programmes for which data is broadcast to the server (20,120) from one or more said sources in the form of any or any combination of satellite, cable, DAB, DVBT transmission sources.

10. A system according to any of the preceding claims **characterised in that** Forward Error Correction (FEC) is used on the datastream for wireless transmission and/or transcoding is used to ensure that the programmes occupy a known wireless bandwidth.

11. A system according to any of the preceding claims **characterised in that** the data for the said group of programmes or channels is adapted into an Internet Protocol (IP) following receipt by the server (20,120) and prior to transmission to the remote location in order to render the data in a preferred format for wireless transmission.

12. A system according to claim 1 **characterised in that** the data from a satellite uplink is provided as a plurality of data streams over an IP satellite link using multicast IP and an additional multicast transmission of forward error correction data is provided from the uplink to modems (138) in the defined areas (102) via the satellite IP transmission for each data stream so as to enable IP based user devices (104,106,108), which are primarily connected wirelessly at the defined areas (102), to recover any video & audio data that may have been lost during the transmission of the data over the satellite and subsequently via wireless local area networks at the defined areas (102).

13. A system according to any of the preceding claims **characterised in that** the said group of programmes or channels changes over time with the selection of the group made with respect to specific programmes or channels and the programmes are provided in the same order and on selected channels as they would be provided when streamed as part of a conventional channel service.

14. A system according to any of the preceding claims **characterised in that** a user interface is generated on the screen of each user device (104,106,108) and identifies the group of programmes or channels available from the service at that time, and the user can then select to view and/or listen to one of the programmes at that time if their device (104,106,108) is within the said wireless range area (102).

15. A system according to any of the preceding claims **characterised in that** the system includes a router (130) for use in communication with the server (20,120) to assist in configuring the data which is to be wirelessly provided at the defined area (102).

16. A system according to any of the preceding claims **characterised in that** there is transmission of data from the user's device (102) to the server (102,120) when the user's device (104,106,108) is in the defined wireless range area (102) so as to register the device (102) at the server (20,120).

17. A system according to any of the preceding claims **characterised in that** the wireless transmission of the said data to the user devices (104,106,108) within the defined wireless range area (102) is via a distribution system which is local to that area such as a Local Area Network (LAN).

## Patentansprüche

1. System für die Übertragung von Daten zu einer Mehrzahl von Benutzergeräten (104, 106, 108) von einer oder mehreren Quellen, wobei sich die genannten Benutzergeräte innerhalb eines Bereichs befinden, der durch die Reichweite einer drahtlosen Übertragungsvorrichtung (140) definiert ist, um Daten zu empfangen, die drahtlos innerhalb des genannten definierten Bereichs (102) übertragen werden, und diese zu verarbeiten, damit Video und/oder Audio auf dem Benutzergerät (104, 106, 108) erzeugt werden kann, wobei das genannte Benutzergerät Mittel beinhaltet, um eine Benutzerinteraktion über das Gerät zu ermöglichen, um aus einem Dienst einer Gruppe von verfügbaren Programmen oder Programmkanälen ein Programm zum Ansehen und/oder Anhören über das jeweilige Benutzergerät auszuwählen, und die genannte Gruppe verfügbarer Programme oder Kanäle mit Bezug auf vordefinierte Kriterien von einem Server (20, 120) ausgewählt wird, der Daten von den ein oder mehreren Quellen empfängt, und der genannte Server sich in einer von dem genannten Bereich (102) entfernten Satelliten-Uplink-Einrichtung (112) befindet, um die Daten per Satelliten-IP zu der drahtlosen Übertragungsvorrichtung (140) zu übertragen, um Daten drahtlos innerhalb des definierten Bereichs (102) zu übertragen, die Daten für die Programme in der genannten Gruppe von Programmen oder Kanälen durch Multicast drahtlos von der drahtlosen Übertragungsvorrichtung (140) innerhalb des genannten definierten Bereichs (102) übertragen werden, so dass die Daten für die gesamte Gruppe von Programmen oder Kanälen zur Auswahl und zum Empfang durch alle innerhalb des definierten Bereichs (102) befindlichen Benutzergeräte (104, 106, 108) ausgewählt und empfangen werden können, **dadurch gekennzeichnet, dass** eine Übertragung derselben Daten wie die, die für die genannte Gruppe von Programmen benötigt werden, die drahtlos für den definierten Bereich (102) mit drahtloser Reichweite bereitgestellt werden, über eine Breitband-Internetverbindung zu dem genannten Bereich (102) blockiert wird, um Datenduplizierung für den Bereich (102) zu verhindern und um die von der genannten Breitband-Internetverbindung geführte Datenmenge zu reduzieren.

2. System nach Anspruch 1, **dadurch gekennzeichnet, dass** die Vorrichtung (140) zur drahtlosen Datenübertragung als Hotspot-Zugangspunkt fungiert.

3. System nach Anspruch 1, **dadurch gekennzeichnet, dass** die Vorrichtung (140) zur drahtlosen Datenübertragung zum Unterstützen bei Fernrückmeldung des Status und der Steuerung der Vorrichtungen (4) und/oder Geräte von der Headend-Vorrichtung und/oder einer anderen Fernsteuerungsvorrichtung ausgelegt ist.

4. System nach einem der Ansprüche 1-3, **dadurch gekennzeichnet, dass** am Empfangsort (8) mehrere Vorrichtungen (140) zur drahtlosen Datenübertragung vorgesehen sind, die durch gemeinsame Steuersoftware und/oder Verarbeitungsmittel gesteuert werden.

5. System nach Anspruch 1, **dadurch gekennzeichnet, dass** eine IP-fähige Satellitenverbindung verwendet wird, um eine Netzwerk-IP-Verbindung zwischen der Vorrichtung (140) zur drahtlosen Datenübertragung am Empfangsort (8) und dem Server (20, 120) und den Verarbeitungsmitteln am Headend (4) bereitzustellen.

6. System nach Anspruch 1, **dadurch gekennzeichnet, dass** an einem Headend-Server und -Verarbeitungsmittel ein oder mehrere Eingänge vorgesehen sind, die beliebige oder eine beliebige Kombination von DVB-Eingänge(n) für den Satellitendienst, Kabel- oder terrestrisches Fernsehen und/oder andere IP-Video- und/oder Audiodatenströme wie beliebige oder eine beliebige Kombination von Ferndateien, auf die über IP-Netzwerke zugegriffen wird, Dateien, die auf einer mit dem Server verbundenen Festplatte gespeichert sind, eingeben und verarbeiten und an die drahtlosen Übertragungsvorrichtungen (140) an den ein oder mehreren Empfangsorten (8) übertragen können.

7. System nach einem der vorherigen Ansprüche, **dadurch gekennzeichnet, dass** eine Gruppe von verfügbaren Programmen oder Kanälen mit Bezug auf vordefinierte Kriterien vom Server (20, 120) ausgewählt wird, der Daten von einer oder mehreren Quellen empfängt und die Daten für die genannten Programme oder Kanäle zu dem entfernten Ort zur Weiterübertragung am Empfangsort (8) über die Wi-Fi-Übertragungsvorrichtung (140) überträgt, um dadurch die genannte Gruppe für die genannten Benutzergeräte (104, 106, 108) verfügbar zu machen, wenn sie sich in dem genannten definierten Bereich (102) befinden, und die genannten vordefinierten Kriterien von einem Dienstanbieter für den definierten Bereich und/oder dem Eigentümer oder Betreiber einer Anlage, in der sich der definierte Bereich befindet, bestimmt werden.

8. System nach einem der vorherigen Ansprüche, **dadurch gekennzeichnet, dass** das System mit Bezug auf die Anzahl von Benutzergeräten (104, 106, 108), die auf Inhalt zugreifen können, und/oder eine Anzahl verschiedener geografisch beabstandeter Empfangsorte (8), die Daten über das Satellitenübertragungssystem von einer gemeinsamen Sende-Headend (4) empfangen, skalierbar ist.

9. System nach Anspruch 7, **dadurch gekennzeichnet, dass** die genannte Gruppe verfügbarer Programme oder Kanäle eine Teilmenge der Programme ist, für die Daten von einer oder mehreren genannten Quellen in Form einer beliebigen oder einer beliebigen Kombination von Satelliten-, Kabel-, DAB-, DVBT-Übertragungsquellen zum Server (20, 120) gebroadcastet werden.

10. System nach einem der vorherigen Ansprüche, **dadurch gekennzeichnet, dass** für drahtlose Übertragung Vorwärtsfehlerkorrektur (SEC) an dem Datenstrom verwendet wird und/oder Transcodierung eingesetzt wird, um sicherzustellen, dass die Programme eine bekannte drahtlose Bandbreite belegen.

11. System nach einem der vorherigen Ansprüche, **dadurch gekennzeichnet, dass** die Daten für die genannte Gruppe von Programmen oder Kanälen nach dem Empfang durch den Server (20, 120) und vor der Übertragung zu dem entfernten Standort an ein Internetprotokoll (IP) angepasst werden, um die Daten in ein bevorzugtes Format für drahtlose Übertragung zu bringen.

12. System nach Anspruch 1, **dadurch gekennzeichnet, dass** die Daten von einem Satelliten-Uplink als eine Mehrzahl von Datenströmen über eine IP-Satellitenverbindung mittels Multicast-IP bereitgestellt werden und eine zusätzliche Multicast-Übertragung von Vorwärtsfehlerkorrekturdaten vom Uplink zu Modems (138) in den definierten Bereichen (102) über die IP-Satellitenübertragung für jeden Datenstrom bereitgestellt wird, um IP-basierte Benutzergeräte (104, 106, 108), die in erster Linie drahtlos in den definierten Bereichen (102) angeschlossen sind, zu befähigen, jegliche Video- und Audiodaten wiederherzustellen, die während der Übertragung der Daten über den Satelliten und anschließend über drahtlose lokale Netzwerke in den definierten Bereichen (102) verloren gegangen sein könnten.

13. System nach einem der vorherigen Ansprüche, **dadurch gekennzeichnet, dass** sich die genannte Gruppe von Programmen oder Kanälen im Laufe der Zeit ändert, wobei die Auswahl der Gruppe in Bezug auf bestimmte Programme oder Kanäle erfolgt, und die Programme in der gleichen Reihenfolge und auf den ausgewählten Kanälen bereitgestellt werden, wie sie bereitgestellt würden, wenn sie als Teil eines herkömmlichen Kanaldienstes gestreamt werden.

14. System nach einem der vorherigen Ansprüche, **dadurch gekennzeichnet, dass** eine Benutzeroberfläche auf dem Bildschirm jedes Benutzergeräts (104, 106, 108) erzeugt wird und die Gruppe von Programmen oder Kanälen identifiziert, die zu diesem Zeitpunkt von dem Dienst verfügbar sind, und der Benutzer dann eines der Programme zu diesem Zeitpunkt zum Ansehen und/oder Anhören auswählen kann, wenn sich sein Gerät (104, 106, 108) innerhalb des genannten Bereichs (102) mit drahtloser Reichweite befindet.

15. System nach einem der vorherigen Ansprüche, **dadurch gekennzeichnet, dass** das System einen Router (130) zur Verwendung in der Kommunikation mit dem Server (20, 120) enthält, um bei der Konfiguration der Daten zu helfen, die drahtlos in dem definierten Bereich (102) bereitgestellt werden sollen.

16. System nach einem der vorherigen Ansprüche, **dadurch gekennzeichnet, dass** eine Übertragung von Daten vom Benutzergerät (102) zum Server (102, 120) erfolgt, wenn sich das Benutzergerät (104, 106, 108) in dem definierten Bereich (102) mit drahtloser Reichweite befindet, um das Gerät (102) beim Server (20, 120) zu registrieren.

17. System nach einem der vorherigen Ansprüche, **dadurch gekennzeichnet, dass** die drahtlose Übertragung der genannten Daten zu den Benutzergeräten (104, 106, 108) innerhalb des definierten Bereichs (102) mit drahtloser Reichweite über ein Verteilungssystem erfolgt, das sich lokal in diesem Bereich befindet, wie z.B. ein lokales Netzwerk (LAN).

## Revendications

1. Système de transmission de données à une pluralité de dispositifs utilisateurs (104, 106, 108) à partir d'une ou de plusieurs sources, lesdits dispositifs utilisateurs étant localisés au sein d'une zone définie par la portée d'un appareil de transmission sans fil (140) de sorte à recevoir des données transmises sans fil au sein de ladite zone définie (102) et à traiter celles-ci afin de permettre la génération de vidéo et/ou d'audio sur le dispositif utilisateur (104, 106, 108), ledit dispositif utilisateur incluant des moyens pour permettre une interaction d'utilisateur par l'intermédiaire du dispositif afin de sélectionner, à partir d'un service d'un groupe de programmes ou de canaux de programme disponibles, un programme destiné à être visionné et/ou écouté par l'intermédiaire du dispositif utilisateur respectif, et ledit groupe de programmes ou de canaux disponibles est sélectionné en rapport avec des critères prédéfinis par un serveur (20, 120) qui reçoit des données à partir des une ou plusieurs sources et ledit serveur est localisé au niveau d'une installation satellitaire de liaison montante (112) distante de ladite zone (102) pour transmettre les données par l'intermédiaire d'un IP satellitaire à l'appareil de transmission sans fil (140) de sorte à transmettre des données sans fil au sein de la zone définie (102), les données pour les programmes dans ledit groupe de programmes ou de canaux étant multi-diffusées sans fil à partir de l'appareil de transmission sans fil (140) au sein de ladite zone définie (102) de sorte que les données pour l'ensemble du groupe de programmes ou de canaux soient mises à disposition pour être sélectionnées et reçues par l'ensemble des dispositifs utilisateurs (104, 106, 108) localisés au sein de la zone définie (102), **caractérisé en ce que** les mêmes données que celles requises pour ledit groupe de programmes qui est fourni sans fil à la zone à portée sans fil définie (102) soient empêchées d'être transmises par l'intermédiaire d'une connexion internet en bande large vers ladite zone (102) de sorte à éviter qu'une duplication de données ne soit fournie à la zone (102) et à réduire la quantité de données acheminées par ladite connexion internet en bande large.

2. Système selon la revendication 1 **caractérisé en ce que** l'appareil de transmission de données sans fil (140) agit en tant que point d'accès Hotspot.

3. Système selon la revendication 1 **caractérisé en ce que** l'appareil de transmission de données sans fil (140) est conçu pour faciliter la rétroaction à distance du statut et de la commande de l'appareil (4) et/ou des dispositifs à partir de l'appareil de tête de ligne et/ou autre appareil de commande à distance.

4. Système selon n'importe lesquelles des revendications 1-3 **caractérisé en ce qu'**une pluralité d'appareils de transmission de données dans fil (140) sont prévus au niveau de la localisation de réception (8) qui sont commandés par un logiciel de commande et/ou de moyens de traitement communs.

5. Système selon la revendication 1 **caractérisé en ce qu'**une liaison satellitaire compatible IP est utilisée pour fournir une connexion IP de réseau entre l'appareil de transmission de données sans fil (140) au niveau de la localisation de réception (8) et le serveur (20, 120) et les moyens de traitement au niveau de la tête de ligne (4).

6. Système selon la revendication 1 **caractérisé en ce qu'**au niveau d'un serveur et de moyens de traitement de tête de ligne il est prévu une ou plusieurs entrées qui permettent à n'importe quelle entrée ou n'importe quelle combinaison d'entrées DVB pour le service satellitaire, TV terrestre ou par câble et/ou autres flux IP de données vidéo et/ou audio telles que n'importe quel fichier ou n'importe quelle combinaison de fichiers à distance auxquels on accède par le biais de réseaux IP, de fichiers stockés sur un disque dur connecté au serveur, d'être introduite/es et traitée/es et transmise/es à l'appareil de transmission sans fil (140) au niveau des une ou plusieurs localisations de réception (8).

7. Système selon n'importe lesquelles des revendications précédentes **caractérisé en ce qu'**un groupe de programmes ou canaux disponibles est sélectionné en rapport avec des critères prédéfinis par le serveur (20, 120) qui reçoit des données à partir d'une ou de plusieurs sources et transmet les données pour lesdits programmes ou canaux vers la localisation à distance en vue d'une transmission ultérieure au niveau de la localisation de réception (8) par l'intermédiaire de l'appareil de transmission Wi-Fi (140) ce qui permet ainsi audit groupe d'être mis à disposition desdits dispositifs utilisateurs (104, 106, 108) lorsqu'ils sont localisés dans ladite zone définie (102) et que lesdits critères prédéfinis sont déterminés par un fournisseur de services pour la zone définie et/ou le propriétaire ou l'exploitant de locaux au sein desquels la zone définie est localisée.

8. Système selon n'importe lesquelles des revendications précédentes **caractérisé en ce que** le système est évolutif en rapport avec le nombre de dispositifs utilisateurs (104, 106, 108) qui peuvent accéder à du contenu et/ou un nombre de différentes localisations de réception espacées géographiquement (8) qui reçoivent des données par l'intermédiaire du système de transmission satellitaire à partir d'une tête de ligne de transmission commune (4).

9. Système selon la revendication 7 **caractérisé en ce que** ledit groupe de programmes ou canaux disponibles est un sous-ensemble des programmes pour lesquels des données sont diffusées vers le serveur (20, 120) à partir d'une ou de plusieurs desdites sources sous la forme de n'importe quelle source ou n'importe quelle combinaison de sources de transmission par satellite, câble, DAB, DVBT.

10. Système selon n'importe lesquelles des revendications précédentes **caractérisé en ce que** la correction aval des erreurs (FEC, « Forward Error Correction ») est utilisée sur le flux de données pour la transmission sans fil et/ou qu'un transcodage est utilisé pour s'assurer que les programmes occupent une bande passante sans fil connue.

11. Système selon n'importe lesquelles des revendications précédentes **caractérisé en ce que** les données pour ledit groupe de programmes ou canaux sont adaptées dans un protocole internet (IP) à la suite de la réception par le serveur (20, 120) et avant la transmission à la localisation distante afin de rendre les données dans un format préféré pour une transmission sans fil.

12. Système selon la revendication 1 **caractérisé en ce que** les données provenant d'une liaison montante satellitaire sont fournies en tant que pluralité de flux de données par le biais d'une liaison satellitaire IP grâce à l'utilisation d'un IP de multi-diffusion et qu'une transmission multi-diffusion additionnelle de données à correction aval des erreurs est fournie à partir de la liaison montante vers des modems (138) jusqu'aux zones définies (102) par l'intermédiaire de la transmission IP satellitaire pour chaque flux de données de sorte à activer des dispositifs utilisateurs basés sur IP (104, 106, 108), qui sont principalement connectés sans fil au niveau des zones définies (102), pour récupérer des données vidéo et audio susceptibles d'avoir été perdues durant la transmission des données par le biais du satellite et ultérieurement par l'intermédiaire de réseaux locaux sans fil au niveau des zones définies (102).

13. Système selon n'importe lesquelles des revendications précédentes **caractérisé en ce que** ledit groupe de programmes ou canaux change dans le temps avec la sélection du groupe effectuée par rapport à des programmes ou canaux spécifiques et que les programmes sont fournis dans le même ordre et sur des canaux sélectionnés tels qu'ils seraient fournis s'ils étaient diffusés en flux continu faisant partie d'un service de canaux classique.

14. Système selon n'importe lesquelles des revendications précédentes **caractérisé en ce qu'**une interface utilisateur est générée sur l'écran de chaque dispositif utilisateur (104, 106, 108) et identifie le groupe de programmes ou canaux disponibles à partir du service à ce moment-là, et l'utilisateur peut alors sélectionner de visionner et/ou d'écouter un des programmes à ce moment-là si son dispositif (104, 106, 108) se trouve au sein de ladite zone à portée sans fil (102).

15. Système selon n'importe lesquelles des revendications précédentes **caractérisé en ce que** le système inclut un routeur (130) pour être utilisé lors de communications avec le serveur (20, 120) pour faciliter la configuration des données qui sont destinées à être fournies sans fil au niveau de la zone définie (102).

16. Système selon n'importe lesquelles des revendications précédentes **caractérisé en ce qu'**il existe une transmission de données à partir du dispositif de l'utilisateur (102) jusqu'au serveur (102, 120) lorsque le dispositif de l'utilisateur (104, 106, 108) se trouve dans la zone à portée sans fil définie (102) de sorte à enregistrer le dispositif (102) au niveau du serveur (20, 120).

17. Système selon n'importe lesquelles des revendications précédentes **caractérisé en ce que** la transmission sans fil desdites données vers les dispositifs utilisateurs (104, 106, 108) au sein de la zone à portée sans fil définie (102) se fait par l'intermédiaire d'un système de distribution qui est local pour cette zone par exemple un réseau local (LAN, « Local Area Network »).
